# EUROPEAN PATENT SPECIFICATION

(11) **EP 3 243 698 B1**
(45) Date of publication and mention of the grant of the patent: **17.03.2021**
(21) Application number: 17000153.1
(22) Date of filing: 20.04.2011
(51) Int. Cl.: B60P 1/43, B60P 1/04, B60P 1/28, B60P 3/12

(54) **VEHICLE HAVING SLANTING AND TIPPING POSSIBILITIES**
FAHRZEUG MIT SCHIEFSTELL- UND KIPPMÖGLICHKEITEN
VÉHICULE PRÉSENTANT DES POSSIBILITÉS DE BASCULEMENT ET D'INCLINAISON

(43) Date of publication of application: 15.11.2017
(62) Divisional of application: 11075069.2
(73) Proprietor: De Rycke, Stefan, 9870 Olsene (BE)
(72) Inventor: De Rycke, Stefan, 9870 Olsene (BE)
(74) Representative: Marchau, Michel F.L.A.

(56) References cited:
- EP-A2- 1 800 945
- CA-A1- 2 466 619
- DE-A1-102006 013 250
- US-A1- 2005 057 064

## Description

### Technical field

The present invention relates to a vehicle, for example a trailer, provided with a load bed, wherein said load bed can be moved into a dumping position and wherein said load bed can also be moved into a tilted position.

### State of the art

In the world of contractors and gardeners trailers are known as dumpers and transporters. Most common are the dump trailers that are being used for loading and unloading bulk material and transporting goods on pallets.
There are dumpers with a load bed above or in between the wheels. The advantage of dumpers with a load bed in between the wheels is the lower bed height which makes the loading and unloading easier. The disadvantage of trailers with a load bed between the wheels is the limited width of the bed according to the overall width. On top it is not possible to load this type sideways with a forklift truck.

Trailers with a load bed above the wheels have of course a higher bed height. To facilitate the loading and unloading of wheeled equipment ramps are used.
Mostly they have a length between 2 and 2,5meter which makes there handling difficult. Combined with a typical bed height of 700mm this results in a ramp inclination of 17 degrees. As a consequence, the same angle appears at the transition of the ramps with the load bed. This angle constitutes a problem for a lot of wheeled equipment with limited ground clearance such as lawn mowers and height platforms.

When loading heavy wheeled equipment, such as mini excavators, one should also deploy additional supports at the back of the trailer to prevent the lowering effect of the load bed due to the additional weight.
In order to minimize the inclination of the ramps on dumpers having a load bed above the wheels, more and more wheels with a smaller diameter are chosen. However, these kind of wheels are typically more exposed to wear and more vulnerable when hitting foreign obstacles such as curbstones.
The reduced load bed height obtained in this way will also implicate that the ground clearance of the hydraulic cylinder below the load bed becomes very small. This can cause damage to the cylinder when travelling curved roads.

The transporter trailers are developed to further minimize ramp inclination and the resulting angle at the transition of the of the ramps and the load bed when loading wheeled equipment. Their load bed is typically situated in between the wheels and has a height of about 450mm from the ground. With ramps of about 1000mm of length this results in to an inclination of about 12 degrees at the start and the end of the ramps.
To further improve this situation , transporters are developed with a hydraulically tiltable load bed. In this way the ramps and the load bed are aligned.
The angle at the end of the ramps is fully eliminated and the angle of the ramp is further reduced up to 10 degrees.

Transporters cannot be used for transporting goods on pallets because they cannot be loaded from the side.

Prior art describes multiple applications of trailers where the load bed can be put in a dumping position as well as in a tilted position

The DE patent 10 2006 013250 A1 "Zentralachsanhänger" describes a load bed according to the preamble of claim 1.

The FR patent 2768974 "Véhicule genre remorque a double basculement" describes a double pivoting frame wherein a dumping position as well as a tilted position can be accomplished. The linear actuator only takes care of the dump movement. The tilt movement still has to happen manually.

The EP patent 1231103 "Trailer having tilt and dump functions" describes a frame similarly constructed as the frame above. With the aid of one linear actuator and two couplings the load bed can be put either into a dumping as well as in a tilted position.

The description and the drawings imply that the actuator can only move outwards actively and that the return action has to happen by gravity. But in a situation with a tilted load bed where the load is at the back the bed, the load bed will not be able to return to its neutral position.

Claim 3 of this EP-Patent refers to a "connection apparatus" and a "locking device" in which the three separate frames can be connected and in which the different movements are made possible. This implies that, in order to switch, an action is needed on two different locations. This can lead to mistakes and confusion. Additionally, the locks are of mechanical construction which can lead to wear and play.

Using a cylinder in front of the load bed, one will be forced to use a telescopic cylinder which is commonly used. A telescopic cylinder which can also perform a pulling action next to the lifting action is however complex and expensive. Examples are known where one succeeds to get a telescopic cylinder retracting using complex channels, e.g. in DE3909370 :"Double acting telescopic cylinder with mechanical retraction". This patent describes a telescopic cylinder which has a built-in winch which retracts the cylinder.

Techniques as mentioned above are not commonly used and are outside the regular suppliers program of most manufacturers and are therefore expensive.
Moreover for this application the telescopic cylinder should only be able to retract over a limited stroke for which the additional cost of such a double acting cylinder is not justified.

There are also telescopic cylinders which have a single stage which is made retractable. These are being used in the industry on dumpers operating on slopes whereby the load bed cannot lower by gravity only. One makes the smallest extension stage of the cylinder double acting by which the load bed can be pulled across the dead end. Once over the dead end, gravity of the load bed makes the telescopic cylinder to retract further.

When the telescopic cylinder extends to the tilted position, only the biggest extension will move. Because the pulling force in this arrangement is needed on the biggest extension this cylinder is also not part of the standard suppliers program.

### Purpose of the invention

Purpose of the invention is to provide a vehicle that does not share the same disadvantages as mentioned above.

The invention aims for a combination of a dumper having the advantages of a transporter. Targeted customers are those contractors that are working with both bulk goods as well as wheeled equipment. Of course the use by other people and/or for other purposes is not excluded.

This invention relates to a vehicle which makes it possible to have the advantages of both dumpers and transporters with a limited additional investment.
The purpose of the invention is to provide a load bed according to claim having at least three different positions including a backward dumping position, a backward tilted position and a transport position. The load bed is provided with a lifting arrangement which can bring the load bed from the transport position to the dumping position or to the tilted position. The transition from the transport position to the tilted position is obtained exclusively through a pure rotation of the load bed. The load bed is further provided at the back end with doors, which can pivot about both a horizontal hinge and a vertical hinge. These doors can be put into three different positions: horizontally opened, when the doors have been pivoted about the horizontal hinge in the tilted position of the load bed for loading and unloading, vertically opened, when the doors have been pivoted about the vertical hinge adapted to dump bulk in the dumping position of the load bed, and closed in the transport position of the load bed.

According to another particular embodiment, when the load bed is in the backward tilted position, the back end doors may be pivoting about the horizontal hinge bringing these doors in practically the same plane of the load bed so that loading and unloading is facilitated.

According to another particular embodiment, during the transition from the transport position to the backward dumping position, the distance between the rear side of the load bed and the ground may remain practically unchanged. According to a further particular embodiment the load bed comprises a pulling arrangement to bring the load bed back from a tilted position to a transport position whereby the pulling arrangement can have a maximum stroke which is smaller than half of the maximum stroke of the lifting arrangement.

According to a further particular embodiment, the pulling arrangement may comprise a hydraulic cylinder.

According to another particular embodiment the load bed may comprise a common control device for operating the lifting arrangement as well as for operating the pulling arrangement.

According to another particular embodiment the common control may comprise a valve with four active connections .

According to another particular embodiment the pulling arrangement may be locked by means of a stopcock so that the tilt movement is no longer possible. According to another particular embodiment the conversion between the dump and the tilt movement may be done by hydraulic means.

According to another particular embodiment the pulling arrangement may comprise a spring.

According to another particular embodiment the control device may contain three active connections.

According to another particular embodiment the load bed may comprise a mechanical lock which makes it possible to switch between the dump movement and the tilt movement in one single action.

### Brief description of the drawings.

The drawings illustrate an embodiment of the invention, whereby the invention is applied to a trailer. The invention is nevertheless not limited to trailers but can also be applied to other vehicles.
Fig.1 shows schematically an embodiment of the invention, wherein the load bed is in a dumping position.
Fig. 2a, 2b and 2c show the different positions of a vehicle with a double acting telescopic cylinder and a mechanical lock as switching mechanism between the frames.
Fig. 3a, 3b and 3c show, according to an embodiment of the invention ,the different positions of a vehicle with a single acting telescopic cylinder combined with a regular double acting cylinder.
Fig. 4a, 4b, 4c and 4d show, according to an embodiment of the invention ,the different hydraulic schemes of the transition between the higher mentioned positions 3a, 3b and 3c.
Fig.5 show schematic the electric scheme for the control of the electro hydraulic valves used in the schemes 4a till 4d.
Fig. 6a, 6b and 6c show, according to an embodiment of the invention, the different positions of a vehicle with a single acting telescopic cylinder combined with a spring element.
Fig. 7a and 7b show, according to an embodiment of the invention, the different hydraulic schemes for the transition in between the higher mentioned positions 6a, 6b and 6c.
Fig. 8a, 8b and 8c show, according to a further embodiment, a load bed provided at its back end with two doors and the three different positions of the doors.

### Detailed description of the invention:

When the present description refers to the front side of the vehicle then it means the front side in the direction of a normal forward movement of the vehicle, for example in case of a trailer it means the side of the hitch, in case of a truck, the side of the frame adjacent to the drivers cab. With the rear side of the vehicle is meant the opposite side.

The vehicle or the load bed is in a transporting position when the floor of the bed is substantially horizontal, this is parallel with the ground.

Furthermore, dumping of the load bed means that the front side of the load bed is lifted by a rotation about a shaft in a plane at the rear side of the load bed so that the distance between this rear side and the ground remains practically unchanged. This also shows that it involves backwards dumping. The vehicle as such is in the dumping position.

Tilting of the load bed means that the front side of the load bed is lifted by means of a rotation about a shaft located between the front and rear side of the load bed so that the distance between the rear end and the ground becomes smaller. The vehicle is then in a tilted position. This means that it involves backwards tilting.

It is noted that, in accordance with the present invention, the transition from the transport position to the tilted position, includes a pure rotation of the load bed without any translation of the load bed.

First of all the general principle will be described of a vehicle that can both tilt and dump.

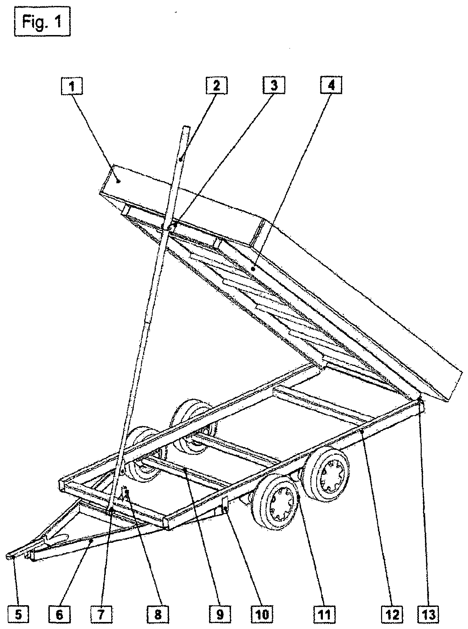

The vehicle as such comprises three different frames: A (e.g. in Fig.1, the frame 6), B (e.g. in Fig. 1, the frame 12) and C (e.g. in Fig.1, the frame 4)

The frames A and B can rotate relative to each other and the frames B and C can also rotate relative to each other.

In a particular embodiment there is a double acting telescopic cylinder located in between the frames A and C which can separate these frames but can also pull these frames towards each other.

In this example the 2 ports of the double acting cylinder are attached to a standard 4/3 valve. Herewith the frame B can uniquely be connected to either the frame B or frame C by means of a specific coupling mechanism (16).

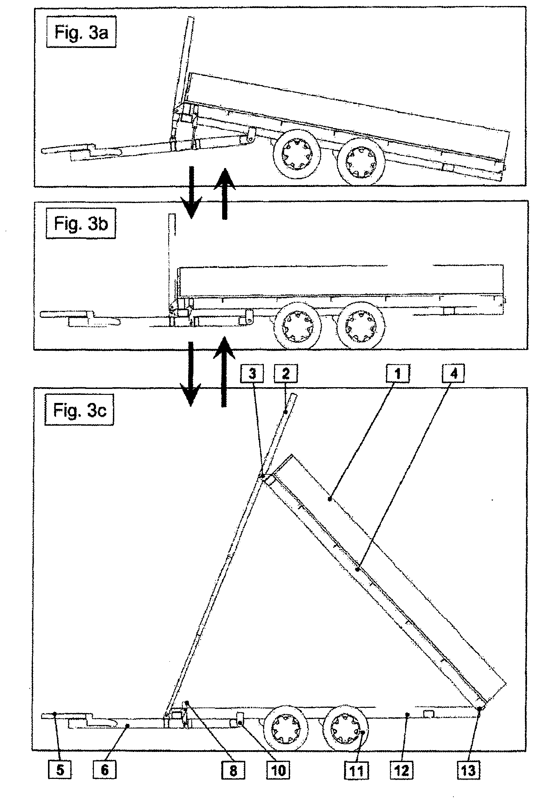

By the cooperation between this coupling mechanism and the operation of the telescopic cylinder, two combinations with corresponding functions are created:
1. Frame B and frame A coupled : dumping of the load bed
2. Frame B and frame C coupled: tilting of the load bed
The maximum distance in the tilted position can be limited by means of a cable or chain (18).
A double acting cylinder however is very expensive, especially if it involves a large double acting cylinder like the one necessary to dump the load bed.
Therefore, according to a particular embodiment (see Fig. 3a till 3c) of the present invention, the telescopic cylinder (2) between the frames A and C is made single acting and there is also an additional double acting cylinder (8), the pulling arrangement, between the frames A and B which can pull these frames towards each other. This additional cylinder can also be single acting.

This pulling arrangement is necessary because, in certain conditions, the weight of the load can be insufficient to come back from a tilted position back to a transport position. This is particularly the case when the load bed is loaded with goods or equipment located behind the axle around which the tilting is done. In this embodiment the port of the telescopic cylinder and the additional double acting cylinder are both connected to a standard 4/3 valve (21). In this case one of the ports of the double acting cylinder is hydraulically connected to the port of the telescopic cylinder. This way closing of the oil flow of the additional double acting cylinder (8) by means of a hydraulic stopcock can operate as a coupling device between the frames A and B.

In cooperation with the operating of the telescopic cylinder, two combinations with corresponding functions arise :
1. Frame A (6) and frame B (12) coupled: dumping of the load bed
2. Frame A (6) and frame B (12) discoupled : tilting of the load bed

Due to the absence of mechanical couplings there is also no chance for wear. The conversion between the 2 movements can easily be performed by means of a hydraulic stopcock (19).

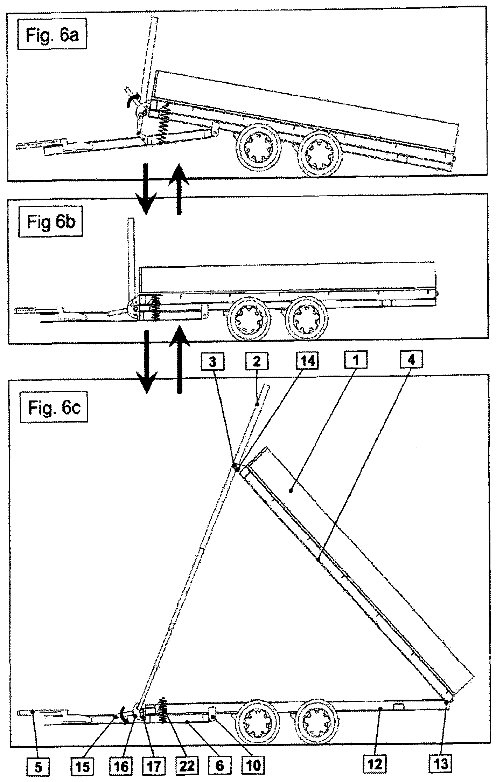

According to another embodiment (see Fig.6a till 6c) the telescopic cylinder (2) between the frames A (6) and C (4) is single acting and between frames A (6) and B (12) there is a spring element (22), the pulling arrangement. This spring pulls the frames towards each other. Besides this there is a mechanical connection (16) which connects either the frames B(12) and C(4) to each other or frames A(6) and B(12). The port of the telescopic cylinder is connected to a standard 3/2 valve (23).

In conjunction to the operation of the telescopic cylinder 2 combinations with corresponding functions arise:
1. Frame B (12) and frame A (6) coupled: dumping of the load bed
2. Frame B (12) and frame C (4) coupled: tilting of the load bed
With this last combination the spring will be put under tension with the extension of the telescopic cylinder. Operating the 3/2 valve will enable the spring tension to push the telescopic cylinder back and bring the load bed back to the transport position.

According to a particular embodiment the spring element is a gas spring. According to a further particular embodiment the following functions can be performed by the vehicle:
1. Unloading of bulk material with a load bed in dumping position.
2. Loading and un-loading of wheeled equipment with a load bed in a tilted position.
3. Transporting material and/or wheeled equipment with a load bed in a horizontal position.
Together with these three functions, the doors at the back of the load bed can also be put into three different positions:
1. Horizontally opened.
2. Vertically opened.
3. Closed

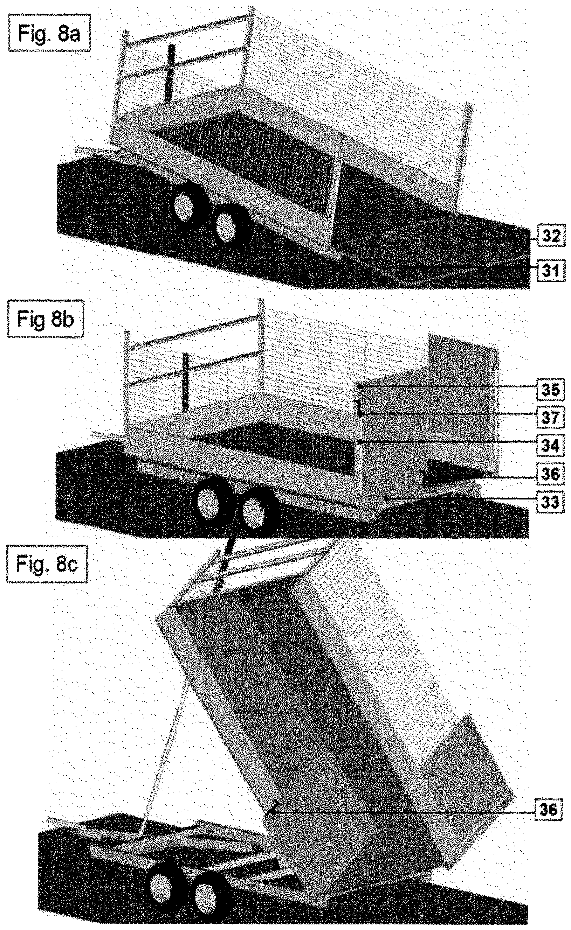

This particular embodiment is being shown in Fig. 8a till 8c and provides two doors at the back end of the load bed: door (31) and door (32). In Fig 8a. the doors have been pivoted about a horizontal hinge (33) which facilitates the loading and unloading with a tilted load bed. In Fig. 8c the doors have been pivoted about a vertical hinge (35) adapted to dump bulk. Fig 8b. shows one door in a closed position and the second door opened about a vertical hinge. Normally in transport position both doors will be closed.

According to the invention the horizontal hinge (33) is connected on one hand to the frame (4) and on the other hand to a further subframe. This enables the sub frame (34) to rotate about a horizontal axis. This movement can be enhanced by spring elements which compensate for the weight of the doors and the sub frame.

The sub frame (34) is L-shaped. On one hand it can rotate horizontally relative to the load bed (1), on the other hand it bears a vertical hinge where the doors can rotate about. The movement about the vertical hinges can be locked in both an open and a closed situation by a lock (36).

The sub frame (34) that rotates about the horizontal hinge (33) can be connected to the load bed (1) with a lock (37).

According to a further particular embodiment the vehicle is a trailer.
It is further noted that the invention is not limited to the combination of features, as shown in the various embodiments above, but other combinations of features are possible.

In Fig.1 the main components of the trailer are shown. According to this embodiment the trailer comprises: A frame (6) which is connected to the towing vehicle through the hitch (5). At its back end, frame (6) is connected to frame (12) through a pivot (10). This pivot is the axis for the tilt movement.
Frame (12) is supported by wheels (11) over one or more axles (9). At the back end of the frame (12), a rotatable connection (13) is foreseen with frame (4); this frame (4) is connected to the load bed (1). The rotatable connection (13) is the axis for the dump movement. According to this embodiment the frame (12) is connected at its front end over the double acting cylinder (8) with the frame (6).
Between the frames (6) and (4), a telescopic cylinder (2) is arranged. This cylinder is connected to these frames through the pivots (3) and (7).

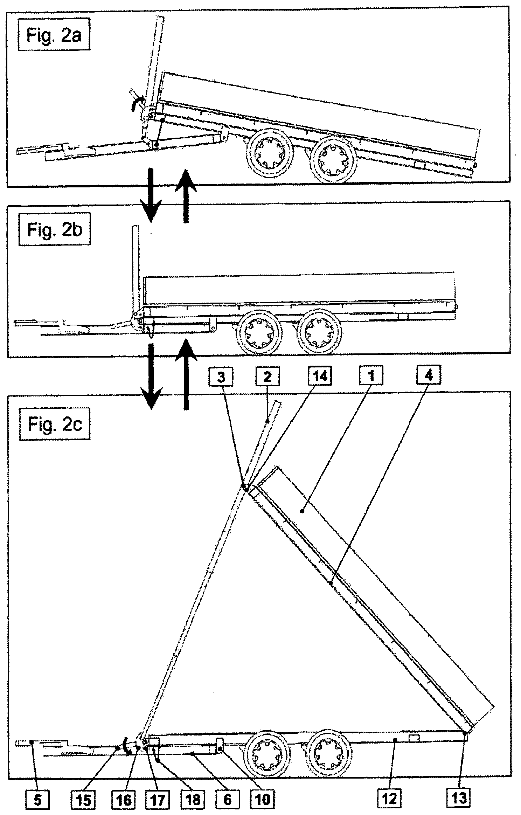

The transition from the transport position in Fig.2b and the dumping position in Fig.2c is made possible by bringing the lock (16) in a down position. The lock is pivotable relative to the frame (12) and is also fixed to the lever (15) which enables to put sufficient force during the switching action. The lock (16) has a hook shape on both sides. In Fig.2c one side of the lock is hooked to the shaft (17) which is a part of the frame (6). On this way the frames (6) and (12) are connected to each other. At this moment one can extend the telescopic cylinder (2). The latter will rotate the frame (4) together with the load bed (1) about the axis (13) and come to a dumping position. In Fig.2a one side of the lock is hooked to the shaft (14) which is part of the frame (4). This way the frames (4) and (12) are connected to each other. At this moment one can extend the telescopic cylinder (2). The latter will rotate the frames (4) and (12) together with the load bed (1) about the pivot (10) and come to a tilted position. The lock is designed in such a way that there is no overlap possible between the two positions. On this way there is an intermediate position where the frame (12) connected to the lock (16) is coupled to neither of the two other frames. This way no un-safe situations will arise. Between the frames (12) and (6) there is an element that limits the tilt movement. In this embodiment the element is a cable (18) which is tensed. In the Fig. 2b and 2b the cable is slack, in Fig. 2a the cable is stretched.

The Fig. 3a till 3c and 4a till 4d show in detail an embodiment of the invention in which the lifting arrangement contains a first single acting hydraulic cylinder (2) while the pulling arrangement contains a second double acting hydraulic cylinder (8). The second cylinder has a stroke which is smaller than the stroke of the first cylinder.
In the Fig. 3a till 3c, the transition between the transport position in Fig.3b and the dumping position in Fig.3c is made possible by blocking the cylinder (8) hydraulically so that no oil can flow away. (See later for the hydraulic details.) In this way the frames (6) and (12) are coupled to each other. When the telescopic cylinder (2) extends at this moment, the frame (4) together with load bed (1) will rotate about the pivot (13) and come to a dumping position.

Starting again from the transport position according to Fig.3b and allowing the hydraulic cylinder (8) to move freely, there will be a down force at the back end of the frame (4) when the telescopic cylinder (2) will extend. The force is transmitted at the back of the frame (12) through the axis (13). This way there will be a leverage about the rear wheels (11) so that cylinder (8) will extend. This way the frame (4) and (12) will move in parallel which leads to the tilted position as shown in Fig.3a.

The cylinder (8) limits the tilt movement.

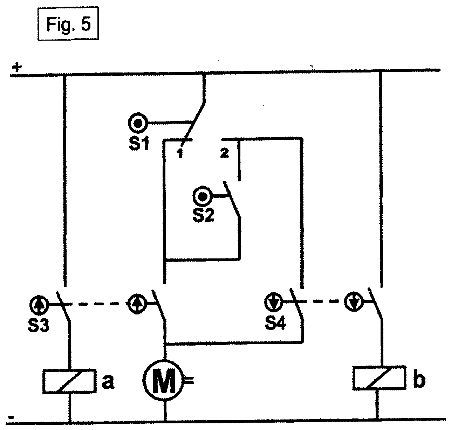

At the front side of frame (12) there is an electric limit switch "S2" (see also Fig. 5) which is operated by frame (4) when this one joins frame (12). When the cylinder (8) is at the end of its stroke and the tilt movement of the frame (12) has ended the telescopic cylinder (2) will try to lift the frame (4) further. The limit switch "S2" will be no longer operated and the hydraulic pump will be shut down so the tilt movement of the frame (4) will stop. (See later for the electric details)

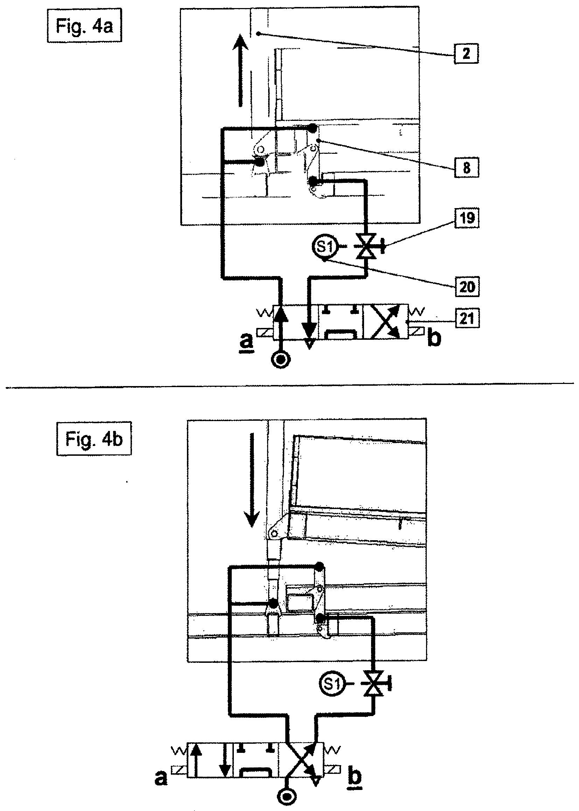

In Fig.4a the hydraulic scheme is shown which makes it possible to move from a transport position according to Fig.3b to a dumping position according to Fig.3c. The valve is being shown in the real position so it is clear how the oil flows.

The hydraulic stopcock (19) is closed and therefore the frame (12) is coupled to the frame (6). The 4/3 valve (21), a hydraulic block with four active connections and three positions, can be put in to different positions by activating the coils "a" and "b". In Fig.4a the oil "a" is activated while the pump is running. The oil flows from the pump towards the telescopic cylinder (2).

In Fig. 4b the hydraulic scheme is shown allowing to move from a dumping position according to Fig.3c back to a transport position according to Fig.3b. The hydraulic stopcock (19) stays closed. The 4/3 valve (21) is activated through the coil "b" and the hydraulic pump is not running. The oil flows from the telescopic cylinder (2) back to the exit.

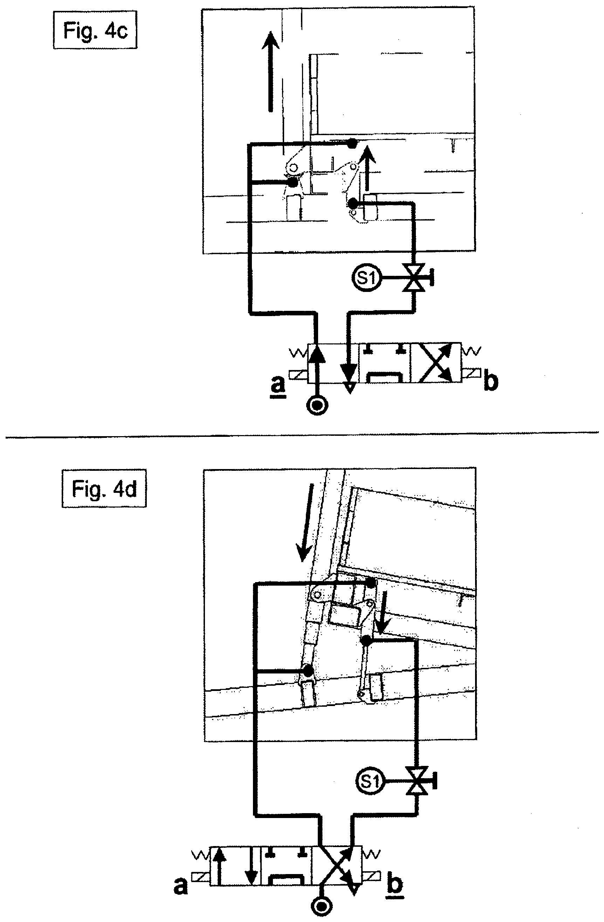

In fig.4c the hydraulic scheme is shown allowing to move from a transport position according to Fig.3b to a tilted position according to Fig.3a.

In this situation, the hydraulic stopcock (19) is opened. The 4/3 valve (21) is activated by coil "a" and the hydraulic pump is running. The oil flows to the telescopic cylinder (2) and the top side of cylinder (8). The oil at the bottom side of the cylinder (8) will be pushed out and flow back to the exit through the valve (21). In fig.4d the hydraulic scheme is shown allowing to move from a tilted position according to Fig.3a to the transport position according to Fig.3b.

The hydraulic stopcock (19) stays open. The 4/3 valve (21) is activated by coil "b" and the hydraulic pump is running. The oil flows to the bottom side of the cylinder (8) so there is a pulling force. By the weight of frame (4) and the pulling force of cylinder (8) the telescopic cylinder (2) will be pushed in. The oil flows therefore out of the telescopic cylinder through the valve (21) back to the exit. It is noted that also a 4/2 valve (a valve with 2 positions) can be used. Important is that the valve contains 4 active connections (the intermediate position will be used during transport)

Fig.5 shows the electric scheme necessary to activate the coils "a" and "b" of the 4/3 valve (21) and the electrical motor "M" of the hydraulic pump. Two push buttons "S3" and "S4" have both two normal open contacts. The button"S3" with an arrow pointing up indicates an upwards movement. The button"S4" with an arrow pointing down indicates an downwards movement. The switch "S1" is connected to the hydraulic stopcock (19) as shown in Fig.4a. When the stopcock is closed the contact is in position "1". If the stopcock is open, the contact is in position"2". The limit switch "S2" is closed when the frames (4) and (12) are joined while the contact opens when the frames separate.

With this electrical scheme the four different situations corresponding to the Fig. 4a till 4d can be realized:
1. Switch "S1" in position "1" (=Hydraulic stopcock closed)
   > Press "up". The coil "a" and the motor "M" are activated.
      This corresponds to the situation in Fig.4a.
   > Press "down". Only the coil "b" is activated.
      This corresponds to the situation in Fig.4b.
2. Switch "S1" in position "2" (=Hydraulic stopcock open)
   > Press "up". The coil "a" and the motor "M" are activated but at the moment that the frames (4) and (12) will separate the limit switch "S2" will also open and deactivate the motor "M".
      This corresponds to the situation in Fig.4c.
   > Press "down". Only the coil "b" and the motor "M" are activated.
      This corresponds to the situation in Fig.4d.

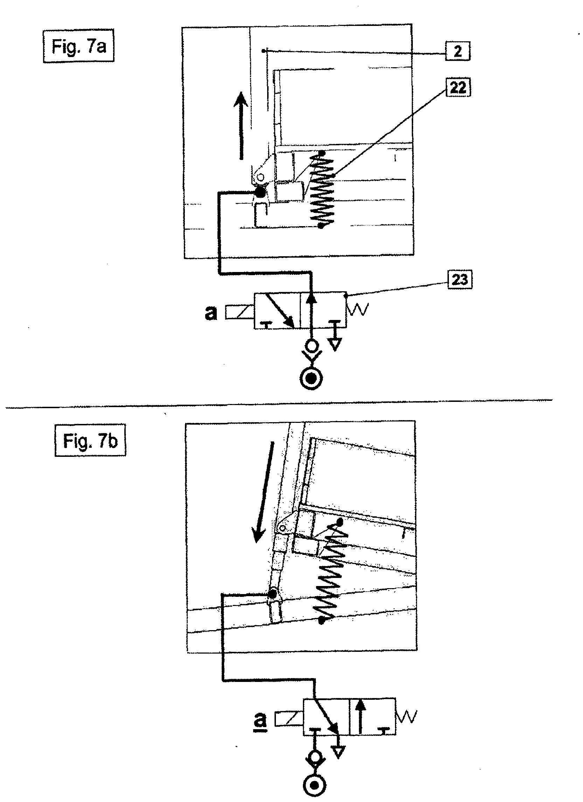

Fig. 6a to 6c shows a further simplified version which offers practically the same functionality as on those versions described higher. According to this embodiment of the invention the lifting device contains a single acting hydraulic cylinder (2) but the pulling arrangement contains a spring (22). The transitions between the different positions are comparable to the Fig.2a to 2c. The operation of the tilt movement (transition from Fig.6b to 6a and back) however is different. First of all the frames (4) and (12) are connected by means of a lock (16) at the front end. At the front end of the frames (6) and (12) there is a spring (22) which pulls these frames towards each other. With the extension of the telescopic cylinder (2) the frames (4) and (12) are being separated from the frame (6). Thereby the spring (22) is put under tension. When the hydraulic valve is activated and the oil can flow freely, the tension in the spring will move the telescopic cylinder back in. The details of this can be found in the Fig.7a and 7b.

In this embodiment a 3/2valve (23) is used, i.e. a hydraulic block with three connections (although there are only 2 flow directions) and two positions. In the position according Fig.7a the hydraulic pump runs and delivers oil to the telescopic cylinder (2) to extend it. When the coil "a" of the 3/2 valve is activated according to the position of Fig.7b the oil can flow back from the telescopic cylinder to the exit.

The invention has its full benefit if, when, in the embodiment according to Fig.3a till 3c, the stroke of the second cylinder (8) is much shorter than the stroke of the first cylinder (2) because this is the most economical realization of the invention. Because tilting rotates the load bed over a much smaller angle than dumping ,the stroke of the pulling arrangement (the second cylinder) can be smaller than half of the stroke of the lifting arrangement (the first cylinder). The same goes for the embodiment Fig.6a till Fig.6c where the stroke of the pulling arrangement means the maximum stretch of the spring (22) (=pulling arrangement)

### Economic benefit:

In a world of small-sized (garden-)contractors, these contractors are practically dependent on dump trailers and transport trailers. Dump trailers are mainly used for transporting material in bulk -and/or pallet form. Transport trailers are used for wheeled equipment. Many of these contractors are forced to buy two trailers because they need to transport both wheeled equipment and other goods on a regular base. With a little of additional investment needed for a normal dump trailer, this new trailer can also be used as a transporter.

## Claims

1. A load bed (1) having at least three different positions including a backward dumping position, a backward tilted position and a transport position,
the load bed being provided with a lifting arrangement (2) which can bring the load bed from the transport position to the dumping position or to the tilted position,
wherein the transition from the transport position to the tilted position is obtained exclusively through a pure rotation of the load bed **characterized in that**
the load bed (1) is further provided at the back end with two doors (31, 32), and these two doors can pivot about both a horizontal hinge (33) and a vertical hinge (35) by means of an L- shaped subframe (34) connected to the horizontal hinge (33) to rotate horizontally relative to the load bed (1) on one hand and on the other hand bearing the vertical hinge (35) where the doors can rotate about between an open and closed situation, and they can be put into three different positions
a. horizontally opened, when the doors have been pivoted about the horizontal hinge (33) in the tilted position of the load bed for loading and unloading.
b. vertically opened, when the doors have been pivoted about the vertical hinge (35) adapted to dump bulk in the dumping position of the load bed, and
c. closed in the transport position of the load bed;
whereby, when the load bed is in the dumping position, the back end doors are pivoting about the vertical hinge over an angle of 270°.

2. The load bed of the previous claim,
whereby, when the load bed is in the backward tilted position, the back end doors are pivoting about the horizontal hinge bringing these doors in practically the same plane of the load bed so that loading and unloading is facilitated, and
whereby the back end doors are pivoting about the vertical hinge about an angle of 270° when the load bed is in the backward dumped position.

3. The load bed of anyone of the previous claims, whereby, during the transition from the transport position to the backward dumping position, the distance between the rear side of the load bed and the ground remains practically unchanged.

4. The load bed of anyone of the previous claims comprising further a pulling arrangement (8,22) to bring the load bed back from a tilted position to a transport position and wherein the pulling arrangement has a maximum stroke which is smaller than half of the maximum stroke of the lifting arrangement.

5. The load bed of claim 4 wherein the pulling arrangement comprises a hydraulic cylinder (8).

6. The load bed of anyone of the previous claims, further comprising a common control device for operating the lifting arrangement as well as for operating the pulling arrangement.

7. The load bed as described in claim 6 wherein the common control device comprises a valve with four active connections.

8. The load bed as described in anyone of the claims 5 to 7 wherein the pulling device can be locked by means of a stopcock (19) so that the tilt movement is no longer possible.

9. The load bed as described in claim 8 wherein the conversion between the tilt and the dump movement is done in a hydraulic way.

10. The load bed as described in claim 4 wherein the pulling arrangement comprises a spring (22).

11. The load bed as described in claim 9 which further comprises a control device which contains three active connections.

12. The load bed as described in anyone of the claims 1 to 4 which further comprises a lock which makes it possible to switch between the tilt and the dump movement in one movement.

## Patentansprüche

1. Eine Ladepritsche (1) welche drei verschiedene Positionen hat einschließend eine hintere Kippposition, eine hintere Schrägposition, und eine Transportposition,
worin die Ladepritsche vorgesehen ist mit einer Hebe-Einrichtung (2) welche die Ladepritsche von der Transportposition in die Kippposition oder die Schrägposition bringen kann,
wobei der Übergang von der Transportposition zur Schrägposition ausschließend erreicht wird durch eine reine Rotation der Ladepristche;
**dadurch gekennzeichnet dass**
die Ladepritsche (1) weiter am hinteren Ende zwei Türe umfasst (31, 32) und diese zwei Türe drehen können um beide einem horizontalen Scharnier (33) und um einem vertikalen Scharnier (35) mittels eines L-förmigen Unterrahmen (34) einerseits verbunden mit dem horizontalen Scharnier (33) zur horizontalen Rotation bezüglich der Ladepritsche (1) und andererseits tragend das vertikale Scharnier (35) um das herum die Türe drehen können zwischen eine geöffnete und eine geschlossene Situation, und in drei verschiedenen Positionen gestellt werden können;
a. horizontal geöffnet, wenn die Türe gedreht geworden sind um das horizontalen Scharnier (33) in der Schrägposition der Ladepritsche zum Laden und Entladen,
b. vertikal geöffnet, wenn die Türe gedreht worden sind um dem vertikalen Scharnier (35) angepasst um lose Ladung zu kippen in der Kippposition der Ladepritsche, und
c. geschlossen in der Transportposition der Ladepritsche;
wobei, wenn die Ladepritsche sich in der Kippposition befindet, die Türe am hinteren Ende sich um die vertikale Achse drehen um ein Winkel von 270°.

2. Die Ladepritsche gemäß dem vorhergehenden Anspruch,
wobei, wenn die Ladepritsche sich in der hinteren Schrägposition befindet, die Türe am hinteren Ende sich um der horizontalen Achse drehen um diese Türe in ungefähr eine gleiche Ebene der Ladepritsche zu bringen so dass das Laden und Entladen erleichtert wird, und
wobei die Türe am hinteren Ende sich um die vertikale Achse drehen um ein Winkel von 270° wenn die Ladepritsche sich in der hinteren Kippposition befindet.

3. Die Ladepritsche gemäß einem der vorhergehenden Ansprüchen, wobei, während der Übergang von der Transportposition in die hintere Kippposition, der Abstand zwischen der hinteren Seite der Ladepritsche und dem Boden ungefähr unverändert bleibt.

4. Die Ladepritsche gemäß einem der vorhergehenden Ansprüchen welche weiter eine Zugeinrichtung (8, 22) enthält um die Ladepritsche zurück zu bringen von einer Schrägposition zu eine Transportposition und wobei die Zugeinrichtung einen maximalen Hub hat welcher kleiner ist als die Hälfte des maximalen Hubes der Hebeeinrichtung.

5. Die Ladepritsche gemäß Anspruch 4 worin die Zugeinrichtung einen hydraulischen Zylinder (8) umfasst.

6. Die Ladepritsche gemäß einem der vorhergehenden Ansprüchen, welche weiter umfasst eine gemeinsame Kontrolleinrichtung zur Bedienung der Hebe-Einrichtung sowohl als auch zur Bedienung der Zugeinrichtung.

7. Die Ladepritsche wie beschrieben in Anspruch 6, worin die gemeinsame Kontrolleinrichtung ein Ventil umfasst mit vier aktiven Verbindungen.

8. Die Ladepritsche gemäß einem der Ansprüchen 5 bis 7 worin die Zugeinrichtung gesperrt werden kann durch einen Absperrhahn (19) so dass die Schrägbewegung nicht länger möglich ist

9. Die Ladepritsche wie beschrieben in Anspruch 8 worin der Übergang zwischen der Schräg- und der Kippbewegung in einem hydraulischen Weg betätigt wird.

10. Die Ladepritsche wie beschrieben in Anspruch 4, worin die Zugeinrichtung eine Feder (22) umfasst.

11. Die Ladepritsche wie beschrieben in Anspruch 9, welche weiter eine Kontrolleinrichtung umfasst die drei aktive Verbindungen umfasst.

12. Die Ladepritsche wie beschrieben in einem der Ansprüchen 1 bis 4, welche weiter eine Sperre umfasst die es möglich macht umzuschalten zwischen der Schrägbewegung und der Kippbewegung in einer einzigen Bewegung.

## Revendications

1. Une benne (1) ayant au moins trois positions différentes incluant une position de déversement vers l'arrière, une position inclinée vers l'arrière et une position de transport,
dans laquelle la benne est pourvue d'un dispositif de soulèvement (2) qui peut amener la benne de la position de transport vers la position de déversement ou vers la position inclinée,
dans laquelle la transition de la position de transport vers la position inclinée est obtenue exclusivement par une rotation pure de la benne **caractérisée en ce que**
la benne (1) est en plus prévue à son extrémité arrière de deux portes (31, 32) qui peuvent pivoter autour d'une charnière horizontale (33) et autour d'une charnière verticale (35) par l'intermédiaire d'un châssis en forme de L (34), d'une part connecté à la charnière horizontale (33) pour tourner horizontalement par rapport à la benne (1) et d'autre part portant la charnière verticale (35) autour de laquelle les portes peuvent tourner entre une position ouverte et fermée, et qui peuvent être mises dans trois positions différentes :
a. ouvertes horizontalement, quand les portes ont été pivotées autour de la charnière (33) horizontale dans la position inclinée de la benne pour le chargement et le déchargement ;
b. ouvertes verticalement, quand les portes ont été pivotées autour de la charnière verticale (35) adaptée pour le déversement de masse dans la position de déversement de la benne, et
c. fermées dans la position de transport de la benne ;
dans laquelle, quand la benne est dans la position de déversement vers l'arrière, les portes à l'extrémité arrière pivotent autour de la charnière verticale d'un angle de 270°.

2. La benne selon la revendication précédente,
dans laquelle, quand la benne est dans la position inclinée vers l'arrière, les portes à l'extrémité arrière pivotent autour de la charnière horizontale, amenant ces portes dans pratiquement le même plan de la benne de façon à ce que le chargement et le déchargement sont rendus plus facile, et
quand les portes à l'extrémité arrière pivotent autour de la charnière verticale d'un angle de 270° quand la benne est dans la position de déversement vers l'arrière.

3. La benne selon une des revendications précédentes, dans laquelle, pendant la transition de la position de transport vers la position de déversement vers l'arrière, la distance entre le côté arrière de la benne et le sol reste pratiquement inchangée.

4. La benne selon une des revendications précédentes, comprenant en plus un dispositif de traction (8, 22) pour ramener la benne d'une position inclinée vers une position de transport et dans laquelle le dispositif de traction possède une course maximale inférieure à la moitié de la course maximale du dispositif de soulèvement.

5. La benne selon une des revendications précédentes, dans laquelle le dispositif de traction comprend un cylindre hydraulique (8).

6. La benne selon une des revendications précédentes, qui comprend en plus un dispositif de contrôle commun pour faire marcher le dispositif de soulèvement ainsi que pour faire marcher le dispositif de traction.

7. La benne décrite dans la revendication 6 dans laquelle le dispositif de contrôle commun comprend une soupape avec quatre connexions actives.

8. La benne décrite dans une quelconque des revendications 5 à 7, dans laquelle le dispositif de traction peut être bloqué par un robinet d'arrêt (19) de façon à ce que le mouvement vers la position inclinée n'est plus possible.

9. La benne décrite dans la revendication 8 dans laquelle la conversion entre le mouvement vers la position inclinée et le mouvement vers la position de déversement est faite d'une façon hydraulique.

10. La benne décrite dans la revendication 4, dans laquelle le dispositif de traction comprend un ressort (22).

11. La benne décrite dans la revendication 9 qui comprend en plus un dispositif de contrôle qui contient trois connexions actives.

12. La benne décrite dans une quelconque des revendications 1 à 4 qui comprend en plus un verrou qui rend possible de commuter entre le mouvement vers la position inclinée et le mouvement vers la position de déversement dans un mouvement.
